# FASCICULE DE BREVET EUROPEEN

(11) **EP 0 586 274 B1**
(45) Date de publication et mention de la délivrance du brevet: **10.04.1996**
(21) Numéro de dépôt: 93401977.9
(22) Date de dépôt: 29.07.1993
(51) Int. Cl.: A22B 7/00

(54) **Dispositif pour l'équipement d'un poste de transfert et de travail de carcasses d'animaux de boucherie**
Vorrichtung für die Ausstattung von einem Transfer- und Arbeitsplatz für Schlachttierkörper nach dem Schlachten
Device for the equipment of a transfer and working station for slaughtered animal carcasses

(30) Priorité: 18.08.1992 FR 9210106
(43) Date de publication de la demande: 09.03.1994
(73) Titulaire: SA NORMANDIE MANUTENTION "NORMAN", Vimoutiers (Orne) (FR)
(72) Inventeur: Grajoszex, Jean, Crouttes (Orne) (FR)
(74) Mandataire: Wagret, Frédéric Cabinet Wagret

(56) Documents cités:
- EP-A- 0 135 967
- DE-A- 3 321 564
- FR-A- 1 264 662
- GB-A- 1 006 305

## Description

La présente invention concerne le domaine des installations d'abattage et de découpe d'animaux de boucherie.

L'invention concerne plus spécialement un dispositif pour équiper un poste de transfert et de travail de carcasses dans une chaîne d'abattage et de découpe d'animaux de boucherie. FR-A-1 264 662 décrit un tel dispositif.

L'invention concerne plus spécialement un tel équipement destiné au travail de carcasses de bovins.

On sait que ces animaux, après anesthésie par étourdissement notamment électrique, subissent une opération de saignée étant suspendus par une patte recevant une élingue venue d'un chariot de déplacement suspendue à un rail supérieur permettant l'évacuation ultérieure de la carcasse en cours de travail.

En suite de quoi la carcasse subit les opérations de dépouille et découpe dans une chaîne d'abattage.

Pour les opérations ultérieures, après enlèvement des deux pattes, la carcasse est avantageusement suspendue par deux crochets, chacun venu d'un chariot roulant sur un même rail permettant la circulation de la carcasse d'un poste à l'autre.

Dans la phase initiale, l'animal étant suspendu par une seule patte, il est nécessaire de disposer d'une installation de circulation par suspension depuis un monorail dont la portance soit en rapport avec l'effort qui lui est demandé et le rail initial ainsi que le chariot circulant doivent permettre de résister à une charge de l'ordre de 1.500 kilos ; tandis que dans la phase ultérieure de la circulation de la carcasse, suspendue par les deux jarrets enfilés chacun sur un crochet de suspension, après ablation des deux pattes, on peut utiliser un système de circulation plus léger, chaque carcasse étant suspendue par deux chariots, le poids s'en trouve réparti sur deux chariots, chaque chariot répondant à des normes de résistance moins exigeantes etde l'ordre de 750 kilos.

L'invention vise à permettre à la fois le travail de la carcasse à la sortie du poste de saignée et en même temps sa translation depuis le premier système de circulation à portance élevée vers le système de circulation aval dans lequel le poids de la carcasse est réparti sur deux chariots.

Un premier objet de l'invention est donc de constituer un poste de transfert de carcasses depuis une première chaîne amont (à un seul point de suspension) vers une chaîne aval (à deux points de suspension).

Un second objet de l'invention est de permettre ce transfert tout en constituant un poste de travail de la carcasse notamment pour la dépouille des deux pattes postérieures permettant la suspension ultérieure de la carcasse par les deux jarrets arrière en position symétrique et suspendus chacun à un charriot.

A cet effet l'invention concerne un dispositif pour équiper un poste de transfert et de travail de carcasses dans une chaîne d'abattage et de découpe d'animaux de boucherie, caractérisé en ce qu'il est constitué de moyens propres d'une part à supporter la carcasse arrivante et à assurer son mouvement d'élévation et d'abaissement et, d'autre part à permettre la translation de ladite carcasse entre un point d'arrivée à la verticale d'un premier rail de déplacement amont et un point d'évacuation ou de sortie à la verticale d'un second rail de déplacement aval.

Avantageusement, le dispositif est constitué d'une potence comportant un bras horizontal monté à rotation sur un axe vertical.

Et plus spécialement, le dispositif comporte deux potences constituées chacune de deux bras horizontaux, symétriques et diamétralement opposés de chaque côté de leur axe de rotation commun.

Avantageusement l'axe de rotation est coaxial à un montant vertical suspendu à un point d'appui supérieur et supportant en position inférieure les deux bras de potence.

Selon une autre caractéristique, chaque bras de potence comporte un treuil desservant par câble un crochet de suspension permettant l'élévation ou l'abaissement de la carcasse.

Et plus spécialement le treuil est télécommandé, et le dispositif de télécommande est prévu tel que l'organe de télécommande, situé à chaque point respectivement d'entrée et de sortie du poste, commande celui des deux treuils qui se trouve alors momentanément en place au dit point.

La résistance mécanique de l'ensemble des deux bras de potence est prévue telle qu'elle permet à chaque bras de potence de supporter une charge correspondante au poids de la carcasse et cette résistance est prévue double du poids maximum des animaux à traiter.

Avantageusement encore, ledit poste est intercalé entre le premier rail amont propre à assurer le déplacement de la carcasse venue d'un poste de saignée et suspendue à un seul chariot, l'extrémité du premier rail étant interrompue sensiblement à la verticale du positionnement virtuel d'un treuil disposé sur un des bras de potence et correspondant au point d'entrée de la carcasse, le second rail pour l'évacuation vers les postes de découpe ultérieurs débute sensiblement à la verticale du positionnement de l'autre treuil situé sur le bras de potence diamétralement opposé et cet emplacement correspondant au point d'évacuation de la carcasse.

Selon encore une autre caractéristique, la portance des chariots disposés sur le premier rail est prévue pour permettre le supportage d'une carcasse par un seul point et répond à une résistance de l'ordre de 1.500 kilos, tandis que la portance des moyens de déplacement amont sur le rail amont est prévue telle qu'elle permet la circulation de chariots jumelés, deux chariots supportant ensemble une carcasse, la résistance mécanique de chaque chariot étant alors de l'ordre de 750 kilos.

Selon une autre caractéristique, l'axe rotatif supportant les deux bras de potence permet la rotation sur au moins 180° des bras de potence, chacun prenant la place de l'autre et constituant ainsi un tourniquet, chaque potence étant ainsi apte à venir successivement à l'aplomb du point d'entrée au dessus de l'extrémité du rail amont puis au point de sortie à l'aplomb de l'extrémité initiale du rail aval.

L'invention concerne également un procédé pour le travail et la découpe de carcasses à partir d'un poste de travail équipé du dispositif selon l'une ou l'autre des caractéristiques ci-dessus et le procédé est caractérisé par la succession des opérations suivantes :
a) la carcasse est mise en suspension par une patte postérieure suspendue par une élingue à un chariot roulant sur un premier rail amont de portance convenable de l'ordre de 1.500 kilos.
b) on découpe une première cuisse de la carcasse correspondant à la patte non suspendue de la carcasse.
c) on amène la carcasse au point d'entrée dudit poste de travail à la verticale d'un bras de potence.
d) on amène le crochet de suspension desservi par le treuil du bras de potence en attente audit point d'entrée et on engage ce crochet dans le jarret de la première cuisse découpée.
e) on élève ledit câble par manoeuvre du treuil en mettant la carcasse en suspension par rapport à ladite potence par ladite première cuisse découpée et on dégage l'élingue de la patte non découpée en libérant ainsi la carcasse par rapport audit premier rail.
f) on découpe la seconde cuisse libre.
g) on translate la carcasse par rotation de la potence à laquelle elle est suspendue depuis sa position au point d'entrée.
h) et on amène, par manoeuvre du treuil, la carcasse au niveau convenable en vue de sa reprise au point de sortie par le second rail aval.
j) on engage successivement un premier crochet venu d'un premier chariot roulant sur le rail aval dans le jarret libre de la carcasse, puis un second crochet venu d'un second chariot roulant sur le rail aval dans le jarret opposé (premier jarret, comportant encore le crochet de suspension à la potence).
k) on abaisse la carcasse par manoeuvre du treuil pour la mettre en position de suspension sur les deux chariots roulant sur le rail aval en dégageant le crochet de suspension de la potence, la carcasse étant alors libérée par rapport à ladite potence et en suspension par les deux jarrets arrière depuis les deux chariots roulant sur le rail aval, après quoi la carcasse est acheminée vers les postes de travail ultérieurs de la chaîne.

D'autres caractéristiques et avantages de l'invention ressortiront de la description qui suit et qui est donnée à titre d'exemple non limitatif en se référant aux dessins annexés dans lesquels

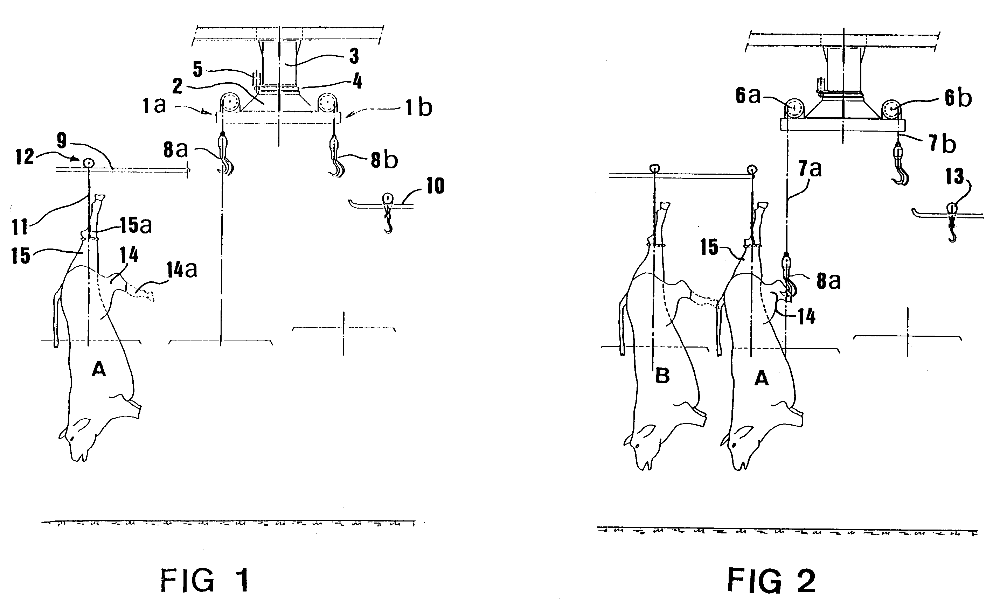

Les figures 1 à 9 représentent un poste de travail et de transfert selon l'invention à divers stades successifs des opérations.

Selon l'ensemble des figures, on voit que le poste selon l'invention permettant le transfert et le travail de carcasses est constitué de deux bras de potence symétriques, respectivement 1a, 1b, suspendus à un pivot supérieur 2 lui-même soutenu depuis la structure supérieure 3, ces deux bras sont montés mobiles sur le pivot à rotation par l'intermédiaire d'un dispositif connu (tel qu'une couronne à billes) par rapport au support fixe 3, la rotation du pivot 2 supportant les deux bras de potence 1a et 1b par l'intermédiaire de la couronne à billes 4 étant mécanisée depuis le moteur 5.

Sur chacun des bras de potence 1a et 1b est monté, à l'extrémité, un treuil respectivement 6a, 6b.

Chacun des treuils permet l'enroulement et la manoeuvre d'un câble respectivement 7a, 7b à l'extrémité duquel est monté un crochet de suspension 8a, 8b.

Les motorisations respectivement des treuils 6a, 6b et de mise en rotation 5 sont manoeuvrées par des moyens de télécommande à la disposition du personnel de service (et non représentés).

Le poste ainsi équipé et le dispositif rotatif ainsi spécifié est intercalé entre l'extrémité terminale d'un rail amont 9 et l'extrémité initiale d'un rail aval 10.

Le rail amont 9 provient des postes d'abattage et de saignée et il est prévu pour la suspension de la carcasse par une seule patte 15 ayant reçue une élingue 11 suspendue à un chariot de déplacement courant sur le monorail 9.

Comme tout le poids de la bête est suspendu sur le seul chariot 12, ce dernier est prévu pour permettre une portance de forte capacité et correspondant au poids maximum des carcasses susceptibles d'être véhiculées, soit une portance de l'ordre de 1.500 kilos.

Le rail aval 10 est quant à lui équipé de chariots 13a , 13b de portance plus réduite et sensiblement de l'ordre de la moitié de la portance du chariot 12 car, ainsi qu'on le voit sur les dessins et ainsi qu'on l'exposera au long du mémoire descriptif, sur ce monorail 10 circule la carcasse mais suspendue à deux chariots, chacun en prise par un crochet venant appréhender la carcasse au-dessus du jarret.

Dans ces conditions, on comprend le fonctionnement de l'ensemble du poste de travail qui peut être décrit comme suit :
On voit à la figure 1, la carcasse du boeuf A arrivant sur le monorail amont 9 vers le poste de travail.

La carcasse A est suspendue par l'élingue 11 au chariot 12 circulant sur le monorail 9 et immédiatement avant d'être transférée au poste de transfert de travail selon l'invention, la carcasse A subit la dépouille de la première cuisse 14 par enlèvement de l'extrémité terminale de la patte 14a, tandis que la seconde cuisse 15 et sa seconde patte 15a intactes servent à la suspension via l'élingue 11.

La carcasse A est reprise à la figure 2 au niveau du poste de travail et de transfert et, à cet effet, le crochet 8a est engagé au dessus du jarret de la cuisse 14 pour permettre la reprise de l'ensemble de la carcasse depuis la potence 1a.

Dans le même temps, la carcasse suivante B arrive immédiatement en amont du poste de transfert et de travail et subit comme précédemment la dépouille d'une première cuisse avec enlèvement de la première patte de la carcasse B.

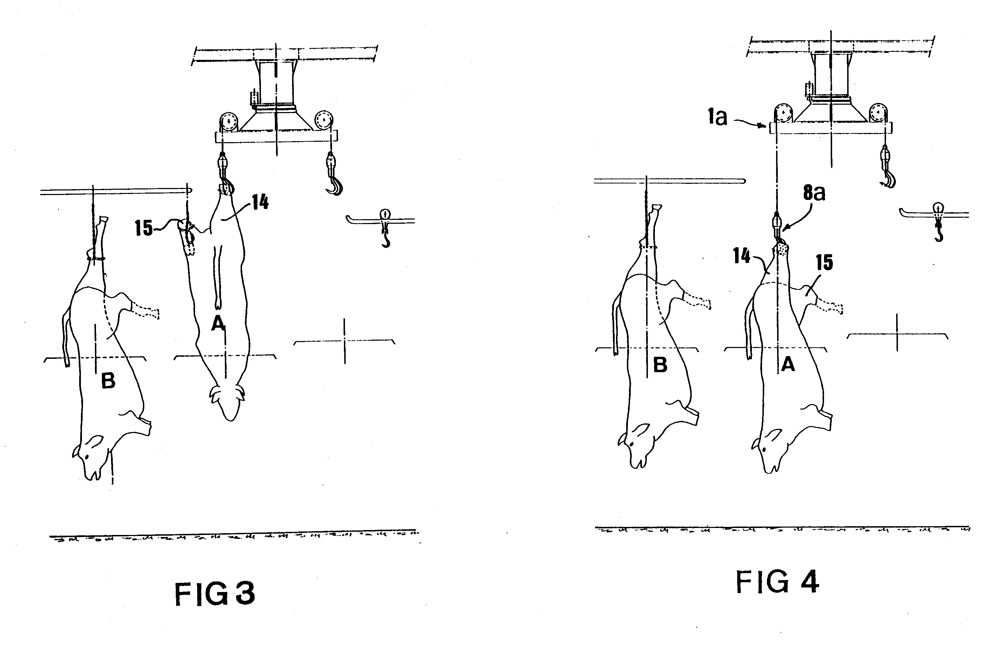

A la figure 3, on voit l'opération suivante dans laquelle la carcasse A est élevée par la manoeuvre du treuil 6a ce qui permet de dégager la cuisse 15 de l'élingue de suspension 11, la carcasse A étant alors libérée du monorail amont 9 n'étant suspendue que par sa cuisse déjà dépouillée à une des deux potences supérieures.

Dans la manoeuvre de la figure 4, on voit que le treuil est manoeuvré de façon à ramener la carcasse en position inférieure permettant le travail du personnel de service qui procède alors à la dépouille de la seconde cuisse 15 par enlèvement de son extrémité formant la patte 15a.

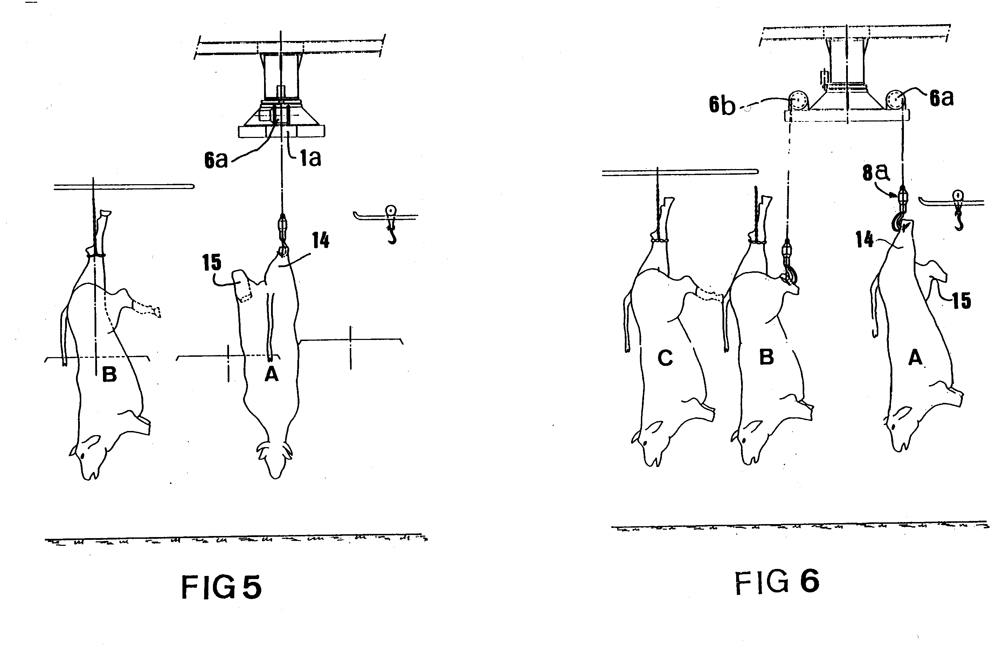

A la figure 5, on voit que la potence est alors amenée en position de rotation de façon à transférer la carcasse A de la position qu'elle occupait à la figure 4 vers la position occupée à la figure 5, c'est-à-dire d'une position située à l'extrémité du monorail amont 9 vers une position située à l'extrémité du monorail aval 10.

La position de la carcasse A aux figures 2, 3 et 4 correspond à sa position au point d'entrée.

La position de la carcasse A à la figure 6 correspond à sa position au point de sortie du poste de transfert.

On voit que, entre ces deux positions, l'ensemble des deux potences et le niveau 3 ont effectué une rotation de 180° par la manoeuvre du moteur 5.

On voit à la figure 6 que dans le même temps où l'on amenait la carcasse A du point d'entrée au point de sortie, on amène en même temps le treuil opposé 6b au point d'entrée permettant alors de desservir la carcasse suivante B qui va pouvoir subir les mêmes opérations ainsi qu'on le verra ci-après.

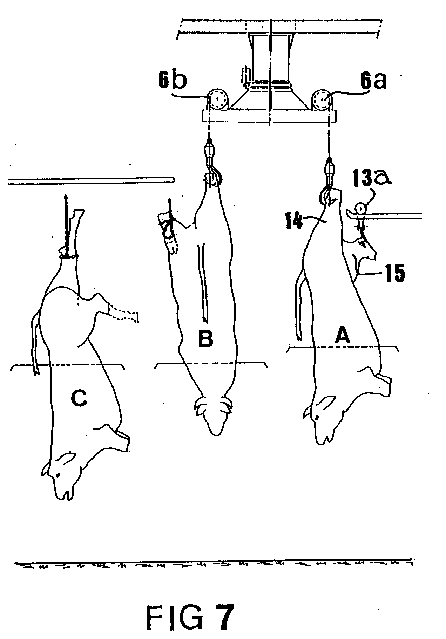

Sur la figure 7, on voit d'une part le transfert de la carcasse A du point de sortie du poste de transfert et de travail vers le monorail 10.

A cet effet, selon la figure 7, on voit que la cuisse 15 qui vient d'être coupée, selon ce qui a été représenté à la figure 4, et qui est donc libre, peut recevoir le crochet de suspension depuis un chariot 13a monté sur le monorail aval 10, la carcasse étant amenée à une position convenable pour l'engagement du crochet au dessus du jarret, la carcasse restant suspendue à la potence 1a.

Dans le même temps, la carcasse B poursuit son cycle et on procède au poste d'entrée au dégagement de la seconde cuisse par enlèvement de l'élingue.

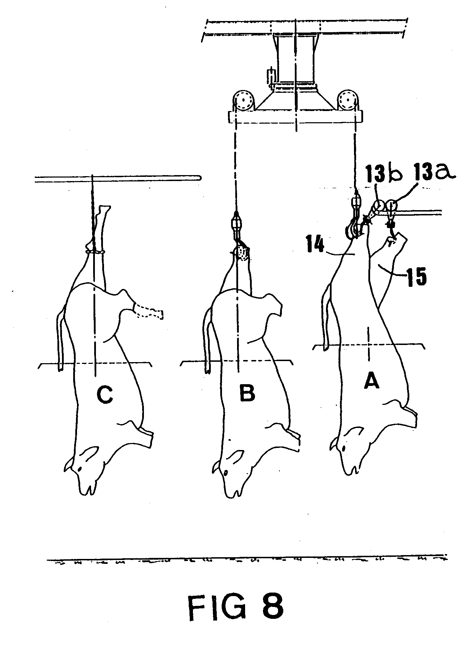

Selon la figure 8, on voit que la carcasse A qui est déjà en prise sur un premier chariot 13a du monorail aval 10 peut recevoir, après mise à hauteur convenable, un second crochet venu du second chariot 13b monté également sur le monorail aval 10 ; la carcasse restant encore soulagée et partiellement suspendue par le crochet 8a, le treuil 6a étant manoeuvré pour ramener cette carcasse à la bonne hauteur facilitant la mise en place du crochet venu du second chariot 13b.

Dans le même mouvement, la carcasse B subit l'ablation de la seconde patte, comme précédemment décrit sur la carcasse A, tandis qu'une troisième carcasse C arrive à son tour en attente à proximité du point d'entrée et subit l'ablation de la première patte.

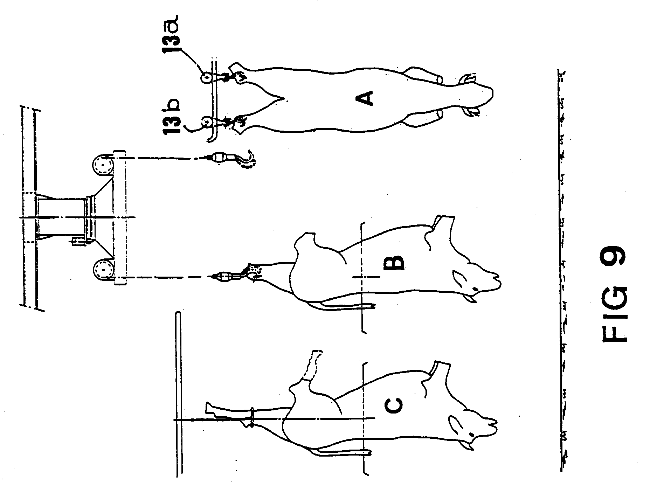

Enfin, on voit que à la figure 9, la carcasse A après abaissement convenable du câble 7a permettant le dégagement du crochet de suspension 8a, se trouve libérée complètement par rapport au poste de transfert et de travail et elle est suspendue alors par les deux membres postérieurs aux crochets eux-même venus des chariots 13a et 13b.

On voit que l'ensemble des organes décrits et la succession des opérations permet de réaliser un poste de travail, d'une part par ablation des deux pattes arrières et mise en condition de la carcasse pour permettre sa suspension tout au long des postes ultérieurs par les deux membres postérieurs en utilisant dans ces conditions des chariots de portance inférieure (de l'ordre de 750 kilos) par rapport au chariot unique utilisé en amont.

Le poste de travail selon l'invention permet donc à la fois le travail de la carcasse et son transfert sur le monorail à deux chariots, ne nécessitant que des capacités de résistance mécanique moindres et donc de prix de revient plus économique, tout en facilitant la circulation de la carcasse pour les phases ultérieures de ressuages, découpes etc...

## Revendications

1. Dispositif pour équiper un poste de transfert et de travail de carcasses dans une chaîne d'abattage et de découpe d'animaux de boucherie, caractérisé en ce qu'il est constitué de moyens (1a, 1b) propres d'une part à supporter la carcasse arrivante et à assurer son mouvement d'élévation et d'abaissement et, d'autre part à permettre la translation de ladite carcasse entre un point d'arrivée à la verticale d'un premier rail (9) de déplacement amont et un point d'évacuation ou de sortie à la verticale d'un second rail (10) de déplacement aval.

2. Dispositif selon la revendication 1,
et caractérisé en ce qu'il est constitué d'une potence comportant un bras horizontal monté à rotation sur un axe vertical.

3. Dispositif selon la revendication 2,
et caractérisé en ce qu'il comporte deux potences (1a, 1b) constituées chacune de deux bras horizontaux, symétriques et diamétralement opposés de chaque côté de leur axe de rotation commun.

4. Dispositif selon l'une des revendications 1 à 3,
et caractérisé en ce que l'axe de rotation est coaxial à un montant (3) vertical suspendu à un point d'appui supérieur (2) et supportant en position inférieure les deux bras de potence.

5. Dispositif selon l'une des revendications 3 et 4, caractérisé en ce que chaque bras de potence (1a, 1b) comporte un treuil (6a, 6b) desservant par câble (7a, 7b) un crochet de suspension (8a, 8b) permettant l'élévation ou l'abaissement de la carcasse.

6. Dispositif selon l'une des revendications 1 à 5, caractérisé en ce que le treuil (6a, 6b) est télécommandé, et le dispositif de télécommande est prévu tel que l'organe de télécommande, situé à chaque point respectivement d'entrée et de sortie du poste, commande celui des deux treuils qui se trouve alors momentanément en place au dit point.

7. Dispositif selon l'une des revendications 3 à 6, caractérisé en ce que la résistance mécanique de l'ensemble des deux bras de potence (1a, 1b) est prévue telle qu'elle permet à chaque bras de potence de supporter une charge correspondante au poids de la carcasse et cette résistance est prévue double du poids maximum des animaux à traiter.

8. Dispositif selon l'une des revendications 1 à 7, caractérisé en ce que ledit poste de transfert est intercalé entre le premier rail amont (9) propre à assurer le déplacement de la carcasse venue d'un poste de saignée et suspendue à un seul chariot (12), l'extrémité du premier rail (9) étant interrompue sensiblement à la verticale du positionnement virtuel d'un treuil (6a) disposé sur un des bras de potence (1a) et correspondant au point d'entrée de la carcasse, le second rail (10) pour l'évacuation vers les postes de découpe ultérieurs débute sensiblement à la verticale du positionnement de l'autre treuil situé sur le bras de potence diamétralement opposé et cet emplacement correspondant au point d'évacuation de la carcasse.

9. Dispositif selon l'une des revendications 1 à 8,
et caractérisé en ce que la portance des chariots (12) disposés sur le premier rail (9) est prévue pour permettre le supportage d'une carcasse par un seul point et répond à une résistance de l'ordre de 1.500 kilos, tandis que la portance des moyens de déplacement (13a, 13b) amont sur le rail (10) amont est prévue telle qu'elle permet la circulation de chariots jumelés, deux chariots (13a, 13b) supportant ensemble une carcasse, la résistance mécanique de chaque chariot étant alors de l'ordre de 750 kilos.

10. Dispositif selon l'une des revendications 1 à 9, caractérisé en ce que l'axe rotatif supportant les deux bras de potence permet la rotation sur au moins 180° des bras de potence (1a, 1b), chacun prenant la place de l'autre et constituant ainsi un tourniquet, chaque potence étant ainsi apte à venir successivement à l'aplomb du point d'entrée au dessus de l'extrémité du rail amont (9) puis au point de sortie à l'aplomb de l'extrémité initiale du rail aval (10).

11. Procédé pour le travail et la découpe de carcasses à partir d'un poste de travail équipé du dispositif selon l'une ou l'autre des caractéristiques ci-dessus et le procédé est caractérisé par la succession des opérations suivantes :
a) la carcasse (A) est mise en suspension par une patte (15) postérieure suspendue par une élingue (11) à un chariot (12) roulant sur un premier rail (9) amont de portance convenable de l'ordre de 1.500 kilos.
b) on découpe une première cuisse (14) de la carcasse correspondant à la patte non suspendue de la carcasse.
c) on amène la carcasse (A) au point d'entrée dudit poste de travail à la verticale d'un bras de potence (1a).
d) on amène le crochet (8a) de suspension desservi par le treuil (6a) du bras de potence (1a) en attente audit point d'entrée et on engage ce crochet dans le jarret de la première cuisse découpée (14).
e) on élève ledit câble (7a) par manoeuvre du treuil (6a) en mettant la carcasse en suspension par rapport à ladite potence (1a) par ladite première cuisse (14) découpée et on dégage l'élingue (11) de la patte non découpée (15) en libérant ainsi la carcasse par rapport audit premier rail (9).
f) on découpe la seconde cuisse libre (15).
g) on translate la carcasse (A) par rotation de la potence (1a) à laquelle elle est suspendue depuis sa position au point d'entrée.
h) et on amène, par manoeuvre du treuil, la carcasse au niveau convenable en vue de sa reprise au point de sortie par le second rail aval (10).
j) on engage successivement un premier crochet venu d'un premier chariot (13a) roulant sur le rail aval (10) dans le jarret libre de la carcasse, puis un second crochet venu d'un second chariot (13b) roulant sur le rail aval (10) dans le jarret opposé (premier jarret, comportant encore le crochet de suspension à la potence).
k) on abaisse la carcasse (A) par manoeuvre du treuil (6a) pour la mettre en position de suspension sur les deux chariots (13a, 13b) roulant sur le rail aval (10) en dégageant le crochet de suspension de la potence (7a), la carcasse étant alors libérée par rapport à ladite potence et en suspension par les deux jarrets arrière depuis les deux chariots roulant sur le rail aval, après quoi la carcasse est acheminée vers les postes de travail ultérieurs de la chaîne.

## Claims

1. Device for equipping a carcass transfer and work station in a chain for slaughtering and cutting up slaughter animals, characterized in that it is constituted by means (1a, 1b) adapted on the one hand to support the arriving carcass and to ensure its movement of rising and lowering and, on the other hand, to allow translation of said carcass between a point of arrival vertically with respect to a first upstream displacement rail (9) and a point of evacuation or outlet vertically with respect to a second downstream displacement rail (10).

2. Device according to Claim 1,
and characterized in that it is constituted by a bracket comprising a horizontal arm mounted to rotate on a vertical pin.

3. Device according to Claim 2,
and characterized in that it comprises two brackets (1a, 1b) each constituted by two horizontal arms, symmetrical and diametrally opposite on each side of their common axis of rotation.

4. Device according to one of Claims 1 to 3,
and characterized in that the axis of rotation is coaxial to a vertical upright (3) suspended from an upper bearing point (2) and supporting in lower position the two bracket arms.

5. Device according to one of Claims 3 and 4, characterized in that each bracket arm (1a, 1b) comprises a winch (6a, 6b) serving by cable (7a, 7b) a suspension hook (8a, 8b) allowing the carcass to rise or lower.

6. Device according to one of Claims 1 to 5, characterized in that the winch (6a, 6b) is remote-controlled, and the remote-control device is provided such that the remote-control member, located at each respective inlet and outlet point of the station, controls that of the two winches which is then momentarily in place at said point.

7. Device according to one of Claims 3 to 6, characterized in that the mechanical strength of the assembly of the two bracket arms (1a, 1b) is provided such that it enables each bracket arm to support a load corresponding to the weight of the carcass and this strength is provided to be double the maximum weight of the animals to be treated.

8. Device according to one of Claims 1 to 7, characterized in that said transfer station is interposed between the first upstream rail (9) adapted to ensure displacement of the carcass coming from a bleeding station and suspended from one carriage (12), the end of the first rail (9) being interrupted substantially vertically of the virtual positioning of a winch (6a) disposed on one of the bracket arms (1a) and corresponding to the carcass inlet point, the second rail (10) for evacuation towards the subsequent cut-up stations starts substantially vertically of the positioning of the other winch located on the diametrally opposite bracket arm and this location corresponding to the carcass evacuation point.

9. Device according to one of Claims 1 to 8,
and characterized in that the lift of the carriages (12) disposed on the first rail (9) is provided to allow support of a carcass by one point and responds to a resistance of the order of 1500 kilos, while the lift of the means (13a, 13b) for displacement upstream on the rail (10) is provided such that it allows circulation of twinned carriages, two carriages (13a, 13b) together supporting a carcass, the mechanical strength of each carriage in that case being of the order of 750 kilos.

10. Device according to one of Claims 1 to 9, characterized in that the rotating pin supporting the two bracket arms allows rotation over at least 180° of the bracket arms (1a, 1b), each taking the place of the other and thus constituting a turnstile, each bracket thus being adapted to come successively plumb with the inlet point above the end of the upstream rail (9) then to the outlet point plumb with the initial end of the downstream rail (10).

11. Process for working and cutting up carcasses from a work station equipped with the device according to one or the other of the characteristics hereinabove and the process is characterized by the succession of the following operations:
a) the carcass (A) is suspended by one rear leg (15) via a sling (11) from a carriage (12) rolling on a first upstream rail (9) of suitable lift of the order of 1500 kilos.
b) a first leg (14) of the carcass, corresponding to the non-suspended leg of the carcass, is cut up.
c) the carcass (A) is brought to the point of entry of said work station vertically with respect to a bracket arm (1a).
d) the suspension hook (8a) served by the winch (6a) of the bracket arm (1a) is brought into standby at said entry point and this hook is engaged in the hock of the first cut-up leg (14).
e) said cable (7a) is raised by manoeuvring the winch (6a), placing the carcass in suspension with respect to said bracket (1a) by said first cut-up leg (14) and the sling (11) is released from the non-cut up leg (15), thus releasing the carcass with respect to said first rail (9).
f) the second free leg (15) is cut up.
g) the carcass (A) is translated by rotation of the bracket (1a) from which it is suspended from its position at the inlet point.
h) and, by manoeuvring the winch, the carcass is brought to the suitable level with a view to being retrieved at the outlet point by the second downstream rail (10).
j) a first hook coming from a first carriage (13a) rolling on the downstream rail (10) is engaged in the free hock of the carcass, then successively a second hook coming from a second carriage (13b) rolling on the downstream rail (10) in the opposite hock (first hock still comprising the hook for suspension on the bracket).
k) the carcass (A) is lowered by manoeuvring the winch (6a) to place it in position of suspension on the two carriages (13a, 13b) rolling on the downstream rail (10), releasing the suspension hook of the bracket (7a), the carcass then being released with respect to said bracket and in suspension by the two rear hocks from the two carriages rolling on the downstream rail, after which the carcass is conveyed towards the subsequent work stations of the chain.

## Patentansprüche

1. Vorrichtung für die Ausstattung eines Transfer- und Arbeitsplatzes für Schlachttierkörper nach dem Schlachten und für das Zerlegen von Schlachttieren, gekennzeichnet durch Mittel (1a, 1b), die einerseits den ankommenden Körper tragen und das Heben und Absenken des Körpers bewirken und andererseits die Überführung des Körpers zwischen einer Eintrittstelle, die sich senkrecht unterhalb einer eintrittseitigen ersten Transportschiene (9) befindet, und einer Abführ- oder Austrittsstelle ermöglichen, die sich senkrecht unterhalb einer auslaufseitigen zweiten Transportschiene (10) befindet.

2. Vorrichtung nach Anspruch 1, dadurch gekennzeichnet, daß sie aus einem Kran mit einem um eine vertikale Achse drehbaren horizontalen Arm besteht.

3. Vorrichtung nach Anspruch 2, dadurch gekennzeichnet, daß sie zwei Kräne (1a, 1b) umfaßt, die jeweils aus zwei horizontalen, symmetrischen und sich beiderseits ihrer gemeinsamen Drehachse diametral gegenüberliegenden Armen bestehen.

4. Vorrichtung nach einem der Ansprüche 1 bis 3, dadurch gekennzeichnet, daß die Drehachse koaxial zu einem vertikalen Ständer (3) verläuft, der oben an einem Aufnahmepunkt (2) aufgehängt ist und unten die beiden Kranarme trägt.

5. Vorrichtung nach einem der Ansprüche 3 und 4, dadurch gekennzeichnet, daß die Kranarme (1a, 1b) jeweils eine Winde (6a, 6b) umfassen, die mittels eines Seils (7a, 7b) einen Aufhängehaken (8a, 8b) so betätigen, daß der Tierkörper angehoben oder abgesenkt werden kann.

6. Vorrichtung nach einem der Ansprüche 1 bis 5, dadurch gekennzeichnet, daß die Winde (6a, 6b) ferngesteuert und die Fernsteuerung derart ausgebildet ist, daß das am Eintritt und Austritt der Station befindliche Organ der Fernsteuerung jeweils jene der beiden Winden steuert, die sich dann vorübergehend an dieser Stelle befindet.

7. Vorrichtung nach einem der Ansprüche 3 bis 6, dadurch gekennzeichnet, daß die mechanische Festigkeit der beiden Kranarme (1a, 1b) derart gewählt ist, daß die Kranarme jeweils eine Last entsprechend dem Gewicht des Tierkörpers aufnehmen können, wobei diese Festigkeit mit dem doppelten Höchstgewicht der zu verarbeitenden Tiere angenommen ist.

8. Vorrichtung nach einem der Ansprüche 1 bis 7, dadurch gekennzeichnet, daß die Überführungsstation zwischen der eintrittseitigen ersten Schiene 9 zum Transport des von einer Ausblutstation kommenden und an nur einer Laufkatze (12) hängenden Tierkörpers zwischengeschaltet ist, wobei das Ende der ersten Schiene im wesentlichen senkrecht unterhalb der gedachten Position einer Winde (6a) an einem der Kranarme (1a), die dem Eintrittspunkt des Tierkörpers entspricht, unterbrochen ist und die zweite Schiene (10) zum Abführen in Richtung zu den nachgeschalteten Zerlegestationen im wesentlichen senkrecht unterhalb der Position der anderen Winde beginnt, die an dem diametral gegenüberliegenden Kranarm angeordnet ist, wobei diese Position dem Abführpunkt des Tierkörpers entspricht.

9. Vorrichtung nach einem der Ansprüche 1 bis 8, dadurch gekennzeichnet, daß die Tragkraft der auf der ersten Schiene (9) angeordneten Laufkatzen (12) derart gewählt ist, daß sie einen an nur einem Punkt aufgehängten Tierkörper tragen können, was einer Festigkeit im Bereich von 1.500 kg entspricht, während die Tragkraft der einlaufseitigen Transportmittel (13a, 13b) auf der einlaufseitigen Schiene (10) so gewählt ist, daß die Laufkatzen jeweils paarweise umlaufen können, wobei die Laufkatzen (13a, 13b) jeweils zusammen einen Tierkörper tragen, so daß die mechanische Festigkeit jeder Laufkatze entsprechend im Bereich von 750 kg liegt.

10. Vorrichtung nach einem der Ansprüche 1 bis 9, dadurch gekennzeichnet, daß die Drehachse der beiden Kranarme eine Drehung der Kranarme (1a, 1b) um mindestens 180° gestattet, so daß die Kranarme jeweils die Position des anderen einnehmen können und auf diese Weise ein Drehkreuz bilden und jeder Kran auf diese Weise nacheinander in eine Position senkrecht oberhalb des Eintrittspunktes am Ende der eintrittseitigen Schiene (9) und dann senkrecht oberhalb des Austrittspunkts am Anfang der austrittseitigen Schiene (10) gebracht werden kann.

11. Verfahren zum Bearbeiten und Zerlegen von Tierkörpern an einer mit der Vorrichtung nach einem der vorgenannten Merkmale ausgestatteten Arbeitsstation, wobei das Verfahren durch die Abfolge der folgenden Arbeitsschritte gekennzeichnet ist:
a) Der Tierkörper (A) wird mit einem Hinterbein (15) in einer Schlinge (11) hängend an einer Laufkatze (12) aufgehängt, die auf einer ersten eintrittseitigen Schiene (9) mit einer geeigneten Tragkraft im Bereich von 1.500 kg läuft.
b) Man trennt zunächst einen ersten, dem nicht aufgehängten Bein des Tierkörpers entsprechenden Fuß (14) vom Tierkörper ab.
c) Man transportiert den Tierkörper (A) zur Eintrittstelle der Arbeitsstation senkrecht unterhalb eines Kranarmes (1a).
d) Man transportiert den von der Winde (6a) des Kranarms (1a) betätigten Haken (8a) in eine Wartestellung am Eintrittspunkt und hängt den Haken in die Keule des ersten abgetrennten Fußes (14) ein.
e) Man zieht durch Betätigung der Winde (6a) das Seil (7a) an, wobei der Tierkörper an dem Kran (1a) am ersten abgetrennten Fuß (14) aufgehängt wird, und löst die Schlinge (11) am nicht abgetrennten Bein (15) und damit den Tierkörper von der ersten Schiene (9).
f) Man trennt den zweiten freien Fuß (15) ab.
g) Man überführt den Tierkörper (A) durch Drehen des Krans (1a), an dem er in seiner am Eintrittspunkt eingenommenen Position hängt, und
h) bringt ihn durch Betätigung der Winde in eine geeignete Höhe, in der er am Austrittspunkt von der zweiten, austrittseitigen Schiene (10) übernommen werde kann.
j) Man hakt nacheinander den ersten Haken, der von einer ersten, auf der eintrittseitigen Schiene (10) laufenden Laufkatze (3a) herabhängt, in den freien Schenke des Tierkörpers und dann einen zweiten Haken, der von einer zweiten, auf der austrittseitigen Schiene (10) laufenden Laufkatze (3b) herabhängt, in den gegenüberliegenden Schenke ein (wobei sich der Haken, mit dem der Körper am Kran aufgehängt ist, noch im ersten Schenkel befindet).
k) Man senkt den Tierkörper (A) durch Betätigung der Winde (6a) soweit ab, daß er an den beiden, auf der austrittseitigen Schiene (10) laufenden Laufkatzen (13a, 13b) hängt, und löst den Haken, mit dem der Tierkörper am Kran (7a) aufgehängt ist, womit der Tierkörper von dem genannten Kran gelöst ist und mit seinen beiden Hinterschenkeln an den beiden auf der austrittseitigen Schiene laufenden Laufkatzen hängt; anschließend wird der Tierkörper zu den nachgeschalteten Arbeitsstationen der Strecke transportiert.
